# EUROPÄISCHE PATENTANMELDUNG

(11) **EP 3 855 266 A1**
(43) Veröffentlichungstag der Anmeldung: **28.07.2021**
(21) Anmeldenummer: 20153131.6
(22) Anmeldetag: 22.01.2020
(51) Int. Cl.: G05B 23/02

(54) **VERFAHREN ZUM VERARBEITEN VON ALARMEN IN EINEM LEITSYSTEM EINER TECHNISCHEN ANLAGE**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren zum Verarbeiten von Alarmen in einem Prozessleitsystem, wobei
- in einer Equipment-Hierarchie (7) durch einen Operator selektierbare Knoten (8, 9) strukturiert hinterlegt sind, welche Prozessobjekte und weitere Objekte des Prozessleitsystems repräsentieren,
- zumindest ein Operator-Server (2) des Prozessleitsystems ein Prozessabbild (6) aufweist, das mit zu Prozessobjekten gehörigen Prozessabbild-Bausteinen (14, 15) versehen ist,
- zumindest ein Automatisierungsgerät (3) versehen ist mit zu den Prozessobjekten gehörigen Automatisierungs-Bausteinen (16, 17), und
- mittels eines User-Interface (18) die Equipment-Hierarchie (7) darstellbar ist.

Das Verfahren ist dadurch gekennzeichnet, dass es dem Operator mittels des Operator Station Clients (11) ermöglicht wird, einen Alarm (6), der einem bestimmten Knoten (5) zugeordnet ist, zu quittieren, wobei bei der Quittierung automatisch alle Alarme (6) quittiert werden, die weiteren Knoten (5), die dem bestimmten Knoten (5) in der Equipment-Hierarchie (4) untergeordnet sind, zugeordnet sind.

## Beschreibung

Die Erfindung betrifft ein Verfahren zum Verarbeiten von Alarmen in einem Prozessleitsystem gemäß dem Oberbegriff des Anspruchs 1. Die Erfindung betrifft ferner ein Leitsystem einer Prozessanlage gemäß Anspruch 2.

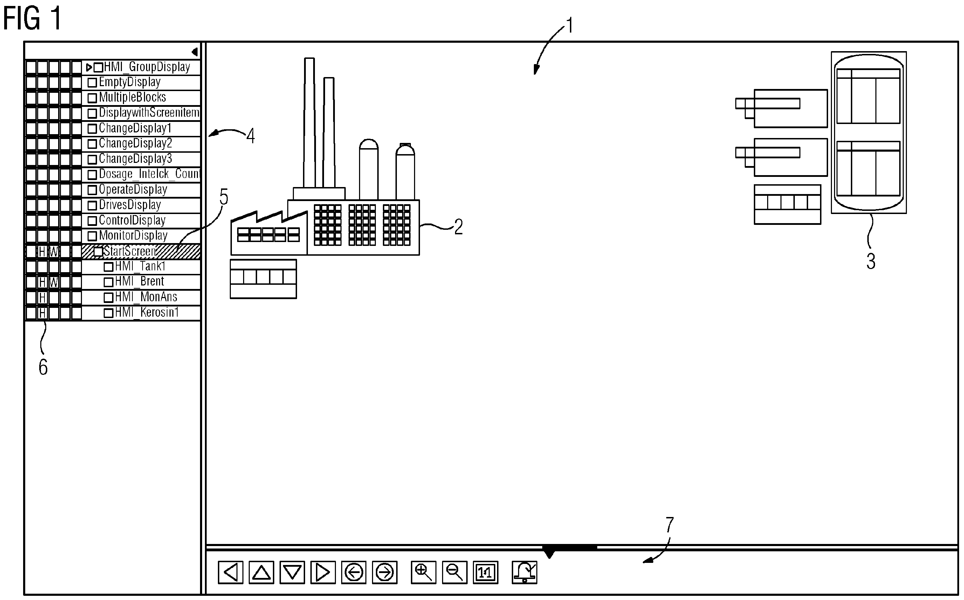

Operatoren verfahrenstechnischer Anlagen (Prozessanlagen) verwenden Anlagenbilder in Operator Station Clients für die Bedienung und Beobachtung der verfahrenstechnischen Anlage. In den Anlagenbildern wird in der Regel der verfahrenstechnische Prozess schematisch visualisiert und durch Blocksymbole der Prozessobjekte, mit denen der verfahrenstechnische Prozess automatisiert wird, dynamisiert. Eine Bedienung des verfahrenstechnischen Prozesses ist unter anderem durch sogenannte Faceplates möglich, die z.B. über die dynamisierten Blocksymbole geöffnet werden können. FIG 1 zeigt ein derartiges Anlagenbild 1 mit einem ersten Blocksymbol 2 und einem zweiten Blocksymbol 3, die jeweils ein Prozessobjekt repräsentieren.

Die Dynamisierung der Blocksymbole 2, 3 kann neben den Prozesswerten der Prozessobjekte (z.B. 50°C an einem Tank) auch deren aggregierte Alarminformationen umfassen, so dass der Operator unmittelbar Probleme in der Prozessautomatisierung erkennen und darauf reagieren kann.

Prozessobjekte einer zu steuernden verfahrenstechnischen Anlage, z. B. Prozessobjekte in Form von Messstellen, Tanks, Ventile, Sensoren, Aktuatoren, ..., sowie weitere Objekte des Prozessleitsystems, beispielsweise Anlagenbilder, Strukturordner, sogenannte Continuous Function Charts (CFCs) und Sequential Function Charts (SFCs) und Batch-Objekte werden gewöhnlich in einer so genannten Equipment-Hierarchie (EQH) strukturiert. In FIG 1 ist eine solche Equipment-Hierarchie 4 auf der linken Seite der Abbildung dargestellt. Die Equipment-Hierarchie 4 wird von einem Anwender/Operator zunächst mittels einer geeigneten Software eines Engineering-Systems erstellt und anschließend mittels des Engineering-Systems kompiliert und in einen Operator Station Server eines Prozessleitsystems geladen, wobei zur Laufzeit der Operator-Systeme bzw. des Prozessleitsystems die Equipment-Hierarchie 4 als zentrale Anlaufstelle z. B. für einen Batchprozess oder zur Navigation bzw. zur Ermittlung eines Prozessobjektes innerhalb der Equipment-Hierarchie 4 genutzt wird.

Die Equipment-Hierarchie 4 weist durch Operatoren selektierbare Knoten 5 auf, welche die Prozessobjekte und die weiteren Objekte des Prozessleitsystems repräsentieren, wobei jeder Knoten auf ein Prozessobjekt oder auf eines der weiteren Objekte referenziert. Ein Operator kann z. B. einerseits durch Selektion bzw. durch Anklicken eines Anlagenbild-Knotens das entsprechende Anlagenbild 1 zur Darstellung auf einer Anzeigeeinheit öffnen, und andererseits durch Selektion bzw. durch Anklicken eines Prozessobjekt-Knotens ein diesem Prozessobjekt zugehöriges Faceplate öffnen, wodurch der Operator das Prozessobjekt bedienen kann.

Die Equipment-Hierarchie 4 dient - wie erläutert - z. B. zur "Navigation" durch einen Operator, wobei der Operator über die Equipment-Hierarchie 4 Objekte bzw. Dokumente (CFC Online, SFC Online, Anlagenbilder) zur Laufzeit öffnen kann. Des Weiteren kann der Operator der Equipment-Hierarchie 4 Informationen über aggregierte Alarmmeldungen 6 entnehmen, die einem bestimmten Prozessobjekt zugeordnet sind.

Um Operatoren auf Gefahren und notwendige Eingriffe (Bedienführung) hinzuweisen, besitzt ein Leitsystem Alarmfunktionen, welche auch in verschiedenen Normen spezifiziert sind (z.B. ISA18.2). Das Alarm- und Meldesystem in Leitsystemen spielt eine wichtige Rolle für die sichere und effiziente Prozessführung einer (verfahrenstechnischen) Anlage. Einerseits erhält der Operator wichtige Informationen, die ihn auf mögliche Gefahren hinweisen, andererseits werden alle Alarme und Warnungen auch zur Qualitätssicherung des zu erzeugenden Produktes archiviert. In bestimmten Betriebssituationen (z.B. Inbetriebnahme, Umbauten, Aufrüstungen, im Regelbetrieb bei Fehlerfortpflanzung, usw.) können schlagartig viele Alarme erzeugt werden. Man spricht hier von einem sogenannten Alarmschwall. Aufgrund der enormen Menge der Alarme bzw. Alarmmeldungen kann dann ein effizientes Bedienen und Beobachten nicht mehr möglich sein.

Fälschlicherweise gemeldete Alarme (Umbauten oder Aufrüstungen), Folgealarme eines Alarmschwalls, minderwichtige Alarme, usw. sollen möglichst schnell aus dem Meldesystem entfernt werden, so dass sich die Operatoren zielführend mit den wesentlichen und kritischen Alarmen beschäftigen können. Bekannt ist, dass in Meldefolgeanzeigen durch passende Filter Gruppen von Alarmen herausgefiltert und quittiert werden, die der Filterkategorie entsprechen. Zudem ist es bekannt, alle in einem einzelnen Anlagenbild visualisierten Alarme von Prozessobjekten durch eine Sammelquittierung zu quittieren.

Immer dann, wenn nicht alle zu quittierenden Alarme zur Alarmschwallbeherrschung durch Blocksymbole in einem Anlagenbild vorhanden sind, oder wenn die zu quittierenden Alarme nicht in einer einzigen Meldefolgeanzeige darstellbar sind, stoßen die Methoden nach dem Stand der Technik an ihre Grenzen. Dabei kann eine Konzentration auf die wesentlichen und kritischen Alarme unter Umständen deutlich erschwert sein.

Der Erfindung liegt daher die Aufgabe zugrunde, ein Leitsystem einer Prozessanlage und ein dazugehöriges Verfahren anzugeben, mittels dessen ein effizientes Alarmmanagement im Rahmen eines Bedienens und Beobachtens der Prozessanlage möglich ist.

Diese Aufgabe wird gelöst durch ein Verfahren zum Verarbeiten von Alarmen in einem Leitsystem einer Prozessanlage mit den Merkmalen des Anspruchs 1. Außerdem wird die Aufgabe gelöst durch ein Leitsystem einer Prozessanlage mit den Merkmalen des Anspruchs 2.

Das Verfahren umfasst die folgenden Schritte:
- In einer auf einem Operator Station Server des Leitsystems hinterlegte Equipment-Hierarchie sind durch einen Operator des Leitsystems selektierbare Knoten strukturiert hinterlegt, welche eines oder mehrere Prozessobjekte des Leitsystems repräsentieren.
- Die Prozessobjekte sind in einem Prozessabbild auf einem Operator Station Server des Leitsystems hinterlegt.
- Die Equipment-Hierarchie wird dem Operator des Leitsystems mittels eines mit dem Operator Station Server verbundenen Operator Station Clients visuell dargeboten.
- Alarme der jeweiligen Prozessobjekte sind den zugehörigen Knoten in der Equipment-Hierarchie zugewiesen, wobei die Alarme auf Prozessstörungen hinweisen und in dem Prozessabbild des Operator Station Servers hinterlegt sind.

Das Verfahren ist erfindungsgemäß dadurch gekennzeichnet, dass es dem Operator mittels des Operator Station Clients ermöglicht wird, einen Alarm, der einem bestimmten Knoten zugeordnet ist, zu quittieren, wobei bei der Quittierung automatisch alle Alarme quittiert werden, die weiteren Knoten, die dem bestimmten Knoten in der Equipment-Hierarchie untergeordnet sind, zugeordnet sind.

Das erfindungsgemäße Leitsystem einer Prozessanlage umfasst wenigstens einen Operator Station Server und wenigstens einen Operator Station Client umfasst, auf welchem Operator Station Server eine Equipment-Hierarchie und ein Prozessabbild hinterlegt sind,
wobei in der Equipment-Hierarchie durch einen Operator des Leitsystems selektierbare Knoten strukturiert hinterlegt sind, welche jeweils eines oder mehrere Prozessobjekte des Leitsystems repräsentieren,
wobei die Prozessobjekte in dem Prozessabbild auf einem Operator Station Server des Leitsystems hinterlegt sind,
wobei der Operator Station Server dazu ausgebildet ist, die Equipment-Hierarchie dem Operator des Leitsystems mittels des Operator Station Clients visuell darzubieten,
wobei Alarme der jeweiligen Prozessobjekte den zugehörigen Knoten in der Equipment-Hierarchie zugewiesen sind,
wobei die Alarme auf Prozessstörungen hinweisen und in dem Prozessabbild des Operator Station Servers hinterlegt sind.

Das Leitsystem ist erfindungsgemäß dadurch gekennzeichnet, dass der Operator Station Server dazu ausgebildet und vorgesehen ist, es dem Operator mittels des Operator Station Clients zu ermöglichen, einen Alarm, der einem bestimmten Knoten zugeordnet ist, zu quittieren, wobei bei der Quittierung automatisch alle Alarme quittiert werden, die weiteren Knoten, die dem bestimmten Knoten in der Equipment-Hierarchie untergeordnet sind, zugeordnet sind.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei der Prozessanlage kann es sich um eine beliebige technische Anlage aus der Prozessindustrie wie beispielsweise eine chemische, pharmazeutische, petrochemische oder eine Anlage aus der Nahrungs- und Genussmittelindustrie handeln.

Ein Alarm bzw. eine dazugehörige Alarmmeldung ist eine Meldung, die eine in der Regel unverzügliche Reaktion eines Operators der Prozessanlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer Prozessanlage erfasst und Benutzern/Operatoren zur Verfügung stellt. Der Operator Station Server stellt in der Regel eine Kommunikationsverbindung zu Automatisierungssystemen der Prozessanlage her und gibt Daten der Prozessanlage an sogenannte Operator Station Clients weiter, die zur Bedienung und Beobachtung eines Betriebs der einzelnen Funktionselemente der Prozessanlage dienen. Der Operator Station Server kann über Client-Funktionen verfügen, um auf die Daten (Archive, Meldungen, Tags, Variablen) anderer Operator Station Server zuzugreifen. Da-durch sind Bilder eines Betriebs der Prozessanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Das Prozessabbild des Operator Station Servers dient zur Hinterlegung einer Momentaufnahme der (Signal-)Zustände der mit dem Operator Station Server über eine Geräteschnittstelle verbindbaren Geräte und/oder Applikationen.

In der Equipment-Hierarchie des Leitsystems werden Prozessobjekte der zu steuernden Prozessanlage, z. B. Prozessobjekte in Form von Messstellen, Tanks, Ventile, Sensoren, Aktuatoren, ..., sowie weitere Objekte des Leitsystems, beispielsweise Anlagenbilder, Strukturordner, sogenannte Continuous Function Charts (CFCs), Sequential Function Charts (SFCs) und Batch-Objekte hierarchisch strukturiert. Die Equipment-Hierarchie dient - wie in der Beschreibung des Standes der Technik erläutert - z. B. zur "Navigation" durch einen Operator, wobei der Operator über die Equipment-Hierarchie Objekte bzw. Dokumente (CFC Online, SFC Online, Anlagenbilder) zur Laufzeit der Prozessanlage öffnen kann. Des Weiteren kann der Operator der Equipment-Hierarchie Informationen über aggregierte Alarme entnehmen, die einem bestimmten Prozessobjekt zugeordnet sind.

Für das Bedienen und Beobachten sind die Prozessobjekte bzw. die die Prozessobjekte repräsentierenden Knoten in der Equipment-Hierarchie (in der Regel nach verfahrenstechnischen Gesichtspunkten) strukturiert worden. So kann der Operator beispielsweise über den Knoten einer Tankanlage zu den Knoten der einzelnen Tanks und von den Knoten der einzelnen Tanks wiederum zu den Knoten der einzelnen technischen Einrichtungen navigieren.

Der Kern der Erfindung liegt darin, dass eine vererbbare Sammelquittierung auf Grundlage eines "oberen" Knotens der Equipment-Hierarchie bereitgestellt wird, wobei die Vererbung der Sammelquittierung ausgehend von dem "oberen" Knoten entlang der Equipment-Hierarchie durchgeführt wird. Ein Alarmschwall, also ein Anhäufung einer Vielzahl von Alarmen, kann auf die erfindungsgemäße Art und Weise schnell und effizient behandelt werden, so dass wesentliche und eventuell kritische Alarme einfacher identifiziert werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: einen Teil eines bekannten Leitsystems;
- FIG 2: einen Teil eines erfindungsgemäßen Leitsystems; und
- FIG 3: ein erfindungsgemäßes Leitsystem in einem Strukturschaubild.

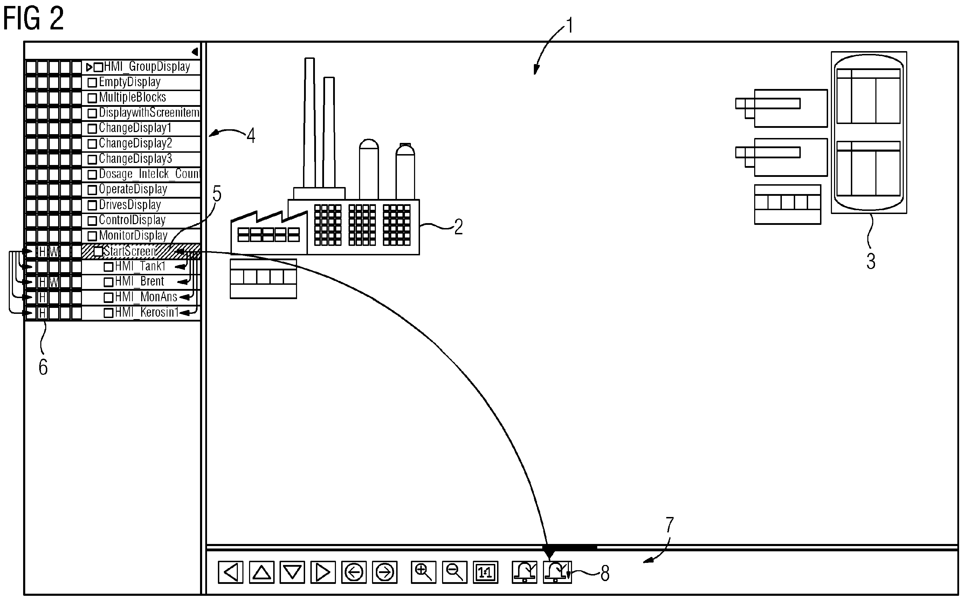

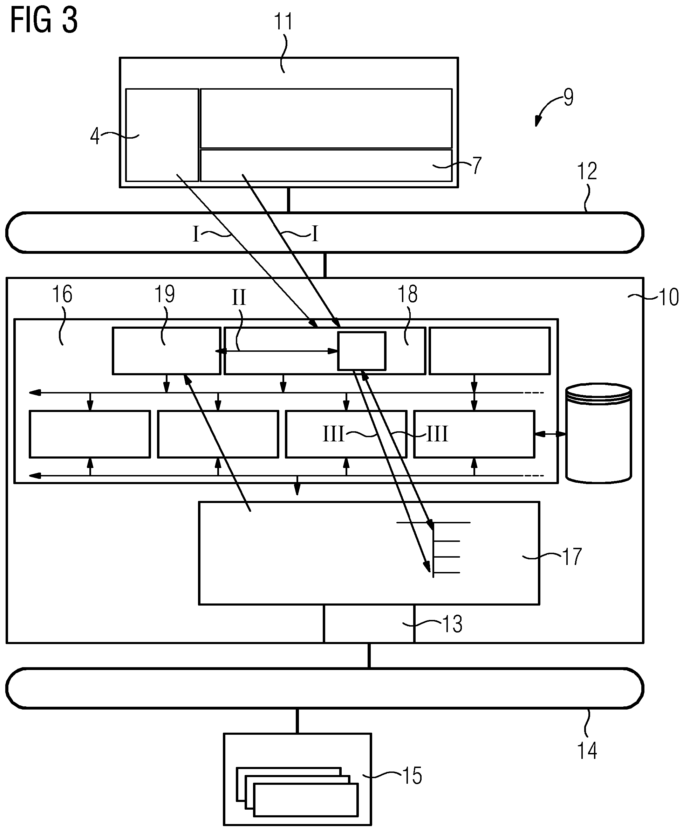

In FIG 2 ist im Wesentlichen dasselbe Anlagenbild 1 dargestellt wie in FIG 1. FIG 1 zeigt das Anlagenbild 1, die Equipment-Hierarchie 4 sowie eine Fußleiste 7 mit Kommandofeldern, mittels derer der Operator Kommandobefehle an einen Operator Station Server (siehe FIG 3) übermitteln kann. FIG 2 stellte eine visuelle Darbietung dar, die der Operator Station Server dem Operator mittels eines Operator Station Clients beispielsweise auf einem Computermonitor darbietet. Die Fußleiste 7 umfasst ein Kommandofeld 8, das bei Anwahl durch den Operator eine Sammelquittierung aller Alarme 6 bzw. Alarmmeldungen 6 des aktuell in der Equipment-Hierarchie 4 ausgewählten Knotens 5 bewirkt. Die Sammelquittierung bezieht sich dabei auf alle Alarmmeldungen 6 des aktuell geöffneten Anlagenbildes 1 (d.h. die Alarmmeldungen 6 beider Blocksymbole 2, 3) sowie aller dem gewählten (oberen) Knoten 5 hierarchisch untergeordneten Knoten bzw. der dazugehörigen Anlagenbilder.

Alternativ ist es möglich, dass auch ohne geöffnetes Anlagenbild 1 eine Sammelquittierung aller zu einem in der Equipment-Hierarchie 4 ausgewählten Knoten 5 gehörigen Alarmmeldungen 6 (und gleichzeitig aller untergeordneten Knoten) erfolgen kann. In der Equipment-Hierarchie muss hierfür nur ein entsprechendes Kommandofeld vorhanden sein. Auch möglich ist eine Tastenkombination oder dergleichen, die eine Sammelquittierung aller Alarmmeldungen 6 eines ausgewählten Knotens 5 bewirkt.

Durch die beschriebenen Möglichkeiten kann ein Operator fälschlicherweise gemeldete Alarme (Umbauten oder Aufrüstungen), Folgealarme eines Alarmschwalls, minderwichtige Alarme, usw. durch das vererbbare Sammelquittieren schnell aus dem Meldesystem entfernen, um sich zielführend mit den wesentlichen und kritischen Alarmen beschäftigen können.

FIG 3 stellt einen Teil eines Leitsystems 9 einer Prozessanlage dar. Das Leitsystem 1 umfasst einen Server eines Bediensystems bzw. einen Operator Station Server 10 und einen dazugehörigen Operator Station Client 11. Der Operator Station Server 10 und der Operator Station Client 11 sind über einen Terminalbus 12 miteinander und mit nicht dargestellten weiteren Komponenten des Leitsystems 9 wie einem Engineering System Server oder einem Prozessdatenarchiv verbunden.

Ein Benutzer bzw. Operator hat mittels des Operator Station Clients 11 mittels des Terminalbus 12 im Kontext eines Bedienens und Beobachtens Zugriff auf den Operator Station Server 10. Der Terminalbus 12 kann, ohne sich darauf zu beschränken, beispielsweise als Industrial Ethernet ausgebildet sein.

Der Operator Station Server 10 weist eine Geräteschnittstelle 13 auf, die mit einem Anlagenbus 14 verbunden ist. Hierüber kann der Operator Station Server 2 mit einem (externen) Gerät 15 kommunizieren. Bei dem angeschlossenen Gerät 15 kann es sich dabei alternativ auch um eine Applikation, insbesondere Webapplikation, handeln. Im Rahmen der Erfindung kann eine beliebige Zahl an Geräten und/oder Applikationen 15 an den Operator Station Server 10 angeschlossen sein. Der Anlagenbus 14 kann, ohne sich darauf zu beschränken, beispielsweise als Industrial Ethernet ausgebildet sein. Das Gerät 15 kann wiederum mit einer beliebigen Anzahl an Subsystemen (nicht dargestellt) verbunden sein.

In dem Operator Station Server 10 ist ein Visualisierungsdienst 16 integriert, über den eine Übertragung von (Visualisierungs-)Daten an den Operator Station Client 11 erfolgen kann. Zudem weist der Operator Station Server 10 ein Prozessabbild (Process Image) 17 auf. In dem Prozessabbild 17 des Operator Station Servers 10 ist eine Momentaufnahme der (Signal-)Zustände der mit dem Operator Station Server 10 über die Geräteschnittstelle 13 verbundenen Geräte und/oder Applikationen 15 hinterlegt.

Der Operator wählt in einem ersten Schritt I ein Kommandofeld 8 an, um die gewünschte Sammelquittierung der Alarme zu triggern. Das Kommandofeld 8 kann sich, wie zuvor bereits ausgeführt, beispielsweise innerhalb der Anzeige der Equipment-Hierarchie 4 oder in einer Fußleiste 7 befinden, welche dem Operator mittels des Operator Station Clients 11 beispielsweise auf einem Monitor (oder Smartphone, Tablet oder dgl.) visuell dargeboten werden. Die Triggerung durch die Anwahl des Kommandofelds 8 wird an eine Komponente "DCS Domain Logic" 18 des Leitsystems 9 weitergeleitet. In einem zweiten Schritt II wendet sich die Komponente "DCS Domain Logic" an eine weitere Komponente 19 des Leitsystems 9, von der sie Informationen bezüglich der hierarchischen Strukturierung der einzelnen Knoten 5 der Equipment-Hierarchie 4 erhält. Nach dem Erhalt dieser Informationen ermittelt die Komponente "DCS Domain Logic" in einem dritten Schritt III bei dem Prozessabbild 17, welche Prozessobjekte mit den einzelnen Knoten 5 verknüpft sind und welche Alarme bzw. Alarmmeldungen 6 diesen Prozessobjekten zugeordnet sind. In einem vierten Schritt IV werden die identifizierten Alarme bzw. Alarmmeldungen 6 durch die Komponente "DCS Domain Logic" quittiert. Die Quittierung wird schließlich in dem Prozessabbild 17 wirksam abgebildet.

## Patentansprüche

1. Verfahren zum Verarbeiten von Alarmen (6) in einem Leitsystem (9) einer Prozessanlage, wobei
- in einer auf einem Operator Station Server (10) des Leitsystems (9) hinterlegte Equipment-Hierarchie (4) durch einen Operator des Leitsystems (9) selektierbare Knoten (5) strukturiert hinterlegt sind, welche eines oder mehrere Prozessobjekte des Leitsystems (9) repräsentieren,
- die Prozessobjekte in einem Prozessabbild (17) auf einem Operator Station Server (10) des Leitsystems (9) hinterlegt sind,
- und die Equipment-Hierarchie (4) dem Operator des Leitsystems (9) mittels eines mit dem Operator Station Server (10) verbundenen Operator Station Clients (11) visuell dargeboten wird,
- Alarme der jeweiligen Prozessobjekte den zugehörigen Knoten (5) in der Equipment-Hierarchie (4) zugewiesen werden, wobei die Alarme (6) auf Prozessstörungen hinweisen und in dem Prozessabbild (17) des Operator Station Servers (10) hinterlegt sind,
**dadurch gekennzeichnet, dass**
es dem Operator mittels des Operator Station Clients (11) ermöglicht wird, einen Alarm (6), der einem bestimmten Knoten (5) zugeordnet ist, zu quittieren, wobei bei der Quittierung automatisch alle Alarme (6) quittiert werden, die weiteren Knoten (5), die dem bestimmten Knoten (5) in der Equipment-Hierarchie (4) untergeordnet sind, zugeordnet sind.

2. Leitsystem einer Prozessanlage, das wenigstens einen Operator Station Server (10) und wenigstens einen Operator Station Client (11) umfasst, auf welchem Operator Station Server (10) eine Equipment-Hierarchie (4) und ein Prozessabbild (17) hinterlegt sind,
wobei in der Equipment-Hierarchie (4) durch einen Operator des Leitsystems (9) selektierbare Knoten (5) strukturiert hinterlegt sind, welche jeweils eines oder mehrere Prozessobjekte des Leitsystems (9) repräsentieren,
wobei die Prozessobjekte in dem Prozessabbild (17) auf einem Operator Station Server (10) des Leitsystems (9) hinterlegt sind,
wobei der Operator Station Server (10) dazu ausgebildet ist, die Equipment-Hierarchie (4) dem Operator des Leitsystems (9) mittels des Operator Station Clients (11) visuell darzubieten,
wobei Alarme (6) der jeweiligen Prozessobjekte den zugehörigen Knoten (5) in der Equipment-Hierarchie (4) zugewiesen sind,
wobei die Alarme (6) auf Prozessstörungen hinweisen und in dem Prozessabbild (17) des Operator Station Servers (10) hinterlegt sind,
**dadurch gekennzeichnet, dass**
der Operator Station Server (10) dazu ausgebildet und vorgesehen ist, es dem Operator mittels des Operator Station Clients (11) zu ermöglichen, einen Alarm (6), der einem bestimmten Knoten (5) zugeordnet ist, zu quittieren, wobei bei der Quittierung automatisch alle Alarme (6) quittiert werden, die weiteren Knoten (5), die dem bestimmten Knoten (5) in der Equipment-Hierarchie (4) untergeordnet sind, zugeordnet sind.
